# FASCICULE DE BREVET EUROPEEN

(11) **EP 3 695 085 B1**
(45) Date de publication et mention de la délivrance du brevet: **27.10.2021**
(21) Numéro de dépôt: 18792859.3
(22) Date de dépôt: 09.10.2018
(51) Int. Cl.: E06B 9/72, E06B 9/171, H02K 11/33, H02K 5/22, H02K 15/14

(54) **ACTIONNEUR ÉLECTROMÉCANIQUE TUBULAIRE ET INSTALLATION DOMOTIQUE COMPRENANT UN TEL ACTIONNEUR**
ROHRMOTOR UND HEIMAUTOMATISIERUNG MIT DIESEM MOTOR
TUBULAR MOTOR AND HOME AUTOMATION INSTALLATION COMPRISING THIS MOTOR

(30) Priorité: 10.10.2017 FR 1759467
(43) Date de publication de la demande: 19.08.2020
(73) Titulaire: Somfy Activites SA, 74300 Cluses (FR)
(72) Inventeur: SONZINI, Marc, 74200 Allinges (FR); DOCHE, Florian, 74000 Annecy (FR); MEYNET, Emilie, 74300 Cluses (FR)
(74) Mandataire: Lavoix
(86) Numéro de dépôt international: PCT/EP2018/077459
(87) Numéro de publication internationale: WO 2019/072835

(56) Documents cités:
- DE-U1-202004 012 150
- FR-A1- 2 983 368
- US-A1- 2012 031 571

## Description

La présente invention concerne un actionneur électromécanique tubulaire et une installation domotique de fermeture ou de protection solaire comprenant un tel actionneur.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document FR 2 983 368 A1 qui décrit un actionneur électromécanique tubulaire pour une installation domotique de fermeture ou de protection solaire.

L'actionneur électromécanique comprend une unité électronique de contrôle, un moteur électrique, un réducteur, un arbre de sortie, un carter et un élément d'obturation. L'unité électronique de contrôle comprend un boîtier et une carte électronique. La carte électronique est disposée à l'intérieur du boîtier, dans une configuration assemblée de l'unité électronique de contrôle. Le carter est creux et configuré pour loger l'unité électronique de contrôle, le moteur électrique et le réducteur. L'élément d'obturation est configuré pour obturer une extrémité du carter.

Le boîtier de l'unité électronique de contrôle comprend des pions, au niveau d'une première extrémité, configurés pour coopérer avec des encoches ménagées dans le moteur électrique, dans une configuration assemblée de l'actionneur électromécanique.

Le boîtier de l'unité électronique de contrôle comprend également des ouvertures, au niveau d'une deuxième extrémité opposée à la première extrémité, configurées pour coopérer avec des pattes élastiquement déformables de l'élément d'obturation, dans la configuration assemblée de l'actionneur électromécanique.

Cependant, cet actionneur électromécanique présente l'inconvénient de réaliser le boîtier de l'unité électronique de contrôle à partir de deux demi-coques configurées pour coopérer ensemble, dans la configuration assemblée de l'unité électronique de contrôle.

Dans la configuration assemblée de l'actionneur électromécanique, les deux demi-coques sont assemblées entre elles, de sorte à définir un plan de jonction s'étendant suivant une direction parallèle à un axe du carter de l'actionneur électromécanique.

Par conséquent, une telle configuration d'assemblage de l'unité électronique de contrôle nécessite de développer un boîtier pour chaque modèle de carte électronique, puisque la longueur du boîtier est déterminée en fonction de la longueur de la carte électronique.

En outre, les deux demi-coques formant le boîtier de l'unité électronique de contrôle comprennent des éléments de positionnement et de fixation de la carte électronique. De tels éléments de positionnement et de fixation sont complexes et nécessitent une cotation fonctionnelle précise des deux demi-coques.

Par conséquent, le coût d'obtention du boîtier de l'unité électronique de contrôle est onéreux.

Par ailleurs, les deux demi-coques formant le boîtier de l'unité électronique de contrôle nécessitent un assemblage manuel, en particulier au travers d'éléments de fixation, notamment, par encliquetage élastique.

La présente invention a pour but de résoudre les inconvénients précités et de proposer un actionneur électromécanique tubulaire, ainsi qu'une installation domotique de fermeture ou de protection solaire comprenant un tel actionneur, permettant de simplifier la fabrication d'une unité électronique de contrôle, de faciliter l'adaptation de la longueur d'un boîtier de l'unité électronique de contrôle en fonction de la longueur d'une carte électronique de l'unité électronique de contrôle, tout en minimisant les coûts d'obtention de l'unité électronique de contrôle et en s'affranchissant de défauts de fabrication du boîtier de l'unité électronique de contrôle.

A cet effet, la présente invention vise, selon un premier aspect, un actionneur électromécanique tubulaire pour une installation domotique de fermeture ou de protection solaire, l'actionneur électromécanique comprenant au moins :
- une unité électronique de contrôle, l'unité électronique de contrôle comprenant un boîtier et une carte électronique, la carte électronique étant disposée à l'intérieur du boîtier, dans une configuration assemblée de l'unité électronique de contrôle,
- un moteur électrique,
- un réducteur,
- un arbre de sortie,
- un carter, le carter étant creux et configuré pour loger au moins l'unité électronique de contrôle, le moteur électrique et le réducteur, et
- un élément d'obturation, l'élément d'obturation étant configuré pour obturer une extrémité du carter.

Selon l'invention,
- le boîtier de l'unité électronique de contrôle comprend au moins un premier tronçon, réalisé sous la forme d'un tube creux, et un deuxième tronçon, réalisé sous la forme d'un tube creux, les premier et deuxième tronçons étant configurés pour loger la carte électronique, dans la configuration assemblée de l'unité électronique de contrôle, et
- le premier tronçon du boîtier comprend des premiers éléments de fixation configurés pour coopérer avec des premiers éléments de fixation du deuxième tronçon du boîtier, dans la configuration assemblée de l'unité électronique de contrôle.

Ainsi, l'obtention du boîtier au moyen des premier et deuxième tronçons, réalisés sous la forme d'un tube creux, permet d'adapter la longueur du boîtier en fonction de la longueur de la carte électronique, au moyen d'au moins l'un des premier et deuxième tronçons, tout en s'affranchissant de défauts de fabrication, en particulier dans le cas où le boîtier est réalisé au moyen d'un seul tronçon, réalisé sous la forme d'un tube creux.

En outre, l'obtention du boîtier au moyen des premier et deuxième tronçons, réalisés sous la forme d'un tube creux, permet de garantir la protection de la carte électronique, lors de l'assemblage de l'unité électronique de contrôle à l'intérieur du carter de l'actionneur électromécanique, en particulier d'éviter une déformation de la carte électronique.

Selon une caractéristique avantageuse de l'invention, les premiers éléments de fixation des premier et deuxième tronçons du boîtier sont des éléments de fixation par encliquetage élastique.

Selon une autre caractéristique avantageuse de l'invention, le premier tronçon du boîtier comprend des deuxièmes éléments de fixation configurés pour coopérer avec des premiers éléments de fixation du moteur électrique, dans une configuration assemblée de l'actionneur électromécanique.

Selon une autre caractéristique avantageuse de l'invention, le moteur électrique comprend un connecteur électrique configuré pour coopérer avec la carte électronique de l'unité électronique de contrôle, dans la configuration assemblée de l'actionneur électromécanique.

Selon une autre caractéristique avantageuse de l'invention, l'actionneur électromécanique comprend également un élément d'interface. L'élément d'interface est disposé entre l'élément d'obturation et l'unité électronique de contrôle. En outre, le deuxième tronçon du boîtier comprend des deuxièmes éléments de fixation configurés pour coopérer avec des premiers éléments de fixation de l'élément d'interface, dans la configuration assemblée de l'actionneur électromécanique.

Selon une autre caractéristique avantageuse de l'invention, les premier et deuxième tronçons du boîtier comprennent respectivement les mêmes premiers et deuxièmes éléments de fixation.

Selon une autre caractéristique avantageuse de l'invention, l'élément d'interface comprend un connecteur électrique configuré pour coopérer avec la carte électronique de l'unité électronique de contrôle.

Selon une autre caractéristique avantageuse de l'invention, les premier et deuxième tronçons du boîtier sont dans une matière plastique. En outre, les premier et deuxième tronçons du boîtier sont obtenus selon une technique d'injection de matière plastique.

Selon une autre caractéristique avantageuse de l'invention, chacun des premier et deuxième tronçons du boîtier comprend une première rainure et une deuxième rainure configurées pour maintenir en position la carte électronique à l'intérieur du boîtier, dans la configuration assemblée de l'unité électronique de contrôle.

La présente invention vise, selon un deuxième aspect, une installation domotique de fermeture ou de protection solaire comprenant un écran enroulable sur un tube d'enroulement entraîné en rotation par un actionneur électromécanique tubulaire conforme à l'invention.

Cette installation domotique présente des caractéristiques et avantages analogues à ceux décrits précédemment en relation avec l'actionneur électromécanique tubulaire tel que mentionné ci-dessus.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2 montrant un actionneur électromécanique tubulaire de l'installation ;
- la figure 4 est une vue schématique en coupe de l'actionneur électromécanique illustré à la figure 3, selon un plan de coupe décalé par rapport à un axe longitudinal de l'actionneur ;
- la figure 5 est une vue schématique en coupe partielle de l'actionneur électromécanique illustré à la figure 3, selon un plan de coupe passant par l'axe longitudinal de l'actionneur ;
- la figure 6 est une vue schématique en coupe et en perspective d'une partie de l'actionneur électromécanique illustré aux figures 4 et 5, représentant un élément d'obturation, un élément d'interface et un élément d'inhibition ;
- la figure 7 est une vue schématique éclatée et en perspective d'une partie de l'actionneur électromécanique illustré aux figures 4 et 5, représentant une unité électronique de contrôle, l'élément d'interface et un capot d'un moteur électrique ;
- la figure 8 est une vue schématique en perspective d'un tronçon d'un boîtier de l'unité électronique de contrôle illustrée à la figure 7 ;
- la figure 9 est une vue schématique éclatée et en perspective d'une partie de l'actionneur électromécanique illustré aux figures 4 et 5, représentant une partie d'un carter de l'actionneur électromécanique, un réducteur, un arbre de sortie, un embout et un élément de maintien ;
- la figure 10 est une vue schématique éclatée et en perspective d'une partie de l'actionneur électromécanique illustré aux figures 4 et 5, représentant une partie du carter de l'actionneur électromécanique, une couronne, l'élément d'obturation, l'élément d'interface et l'élément d'inhibition ; et
- la figure 11 est une vue schématique de l'actionneur électromécanique illustré aux figures 4 et 5, représentative d'un procédé d'assemblage de cet actionneur.

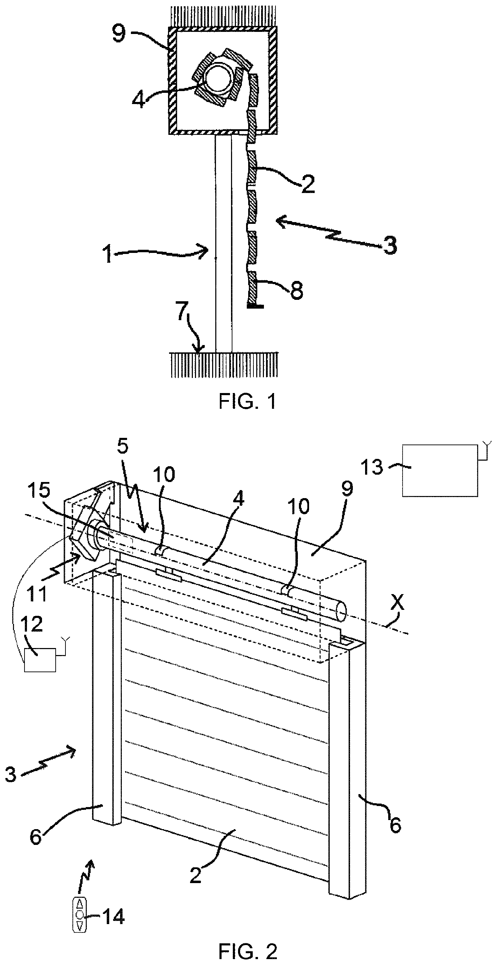

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

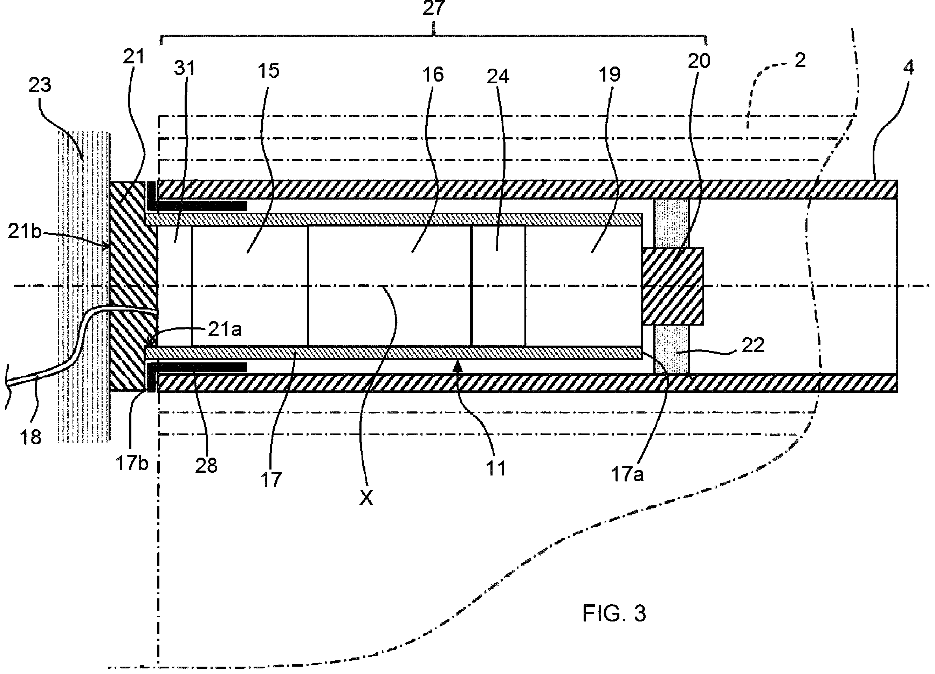

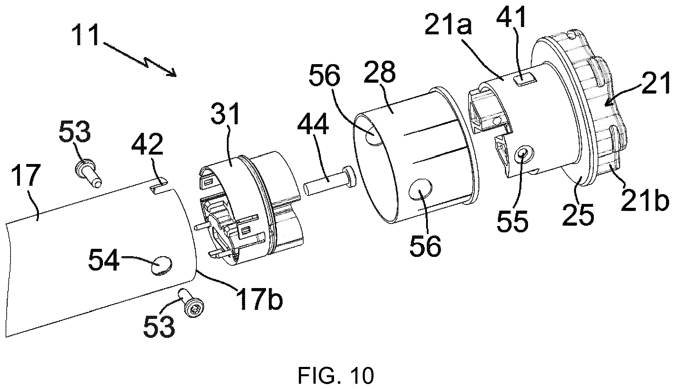

On décrit à présent, plus en détail et en référence aux figures 3 à 11, l'actionneur électromécanique 11 appartenant à l'installation domotique des figures 1 et 2.

L'actionneur électromécanique 11 comprend une unité électronique de contrôle 15, un moteur électrique 16, un réducteur 19 et un arbre de sortie 20.

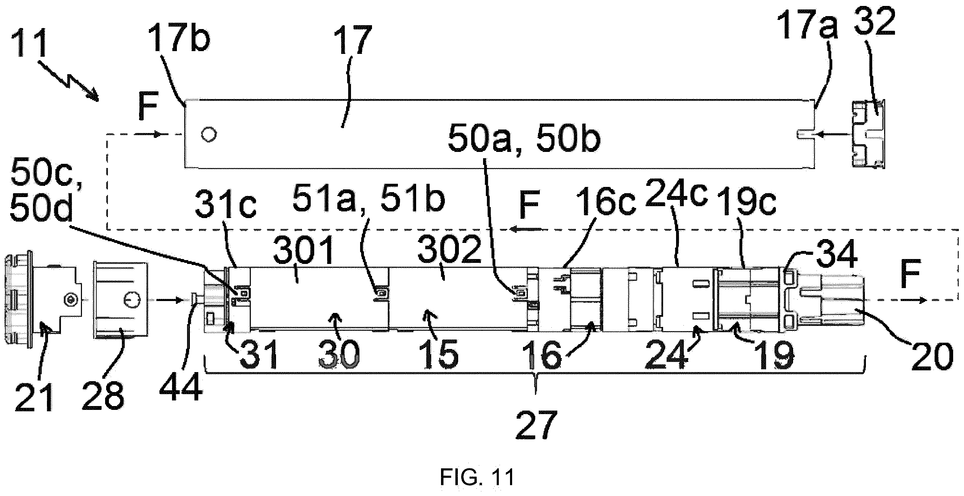

Ici, l'unité électronique de contrôle 15, le moteur électrique 16, le réducteur 19 et l'arbre de sortie 20 forment un ensemble 27, tel qu'illustré aux figures 3 et 11.

Ainsi, l'ensemble 27 est formé par des organes de l'actionneur électromécanique 11, dont l'unité électronique de contrôle 15, le moteur électrique 16, le réducteur 19 et l'arbre de sortie 20 font partie intégrante.

Le moteur électrique 16 comprend un rotor et un stator, non représentés, positionnés de manière coaxiale autour d'un axe de rotation X, qui est également l'axe de rotation du tube d'enroulement 4 en configuration montée du dispositif d'entraînement motorisé 5.

Ici, le réducteur 19 est du type à engrenages.

En pratique, le moteur électrique 16 comprend un arbre de sortie, non représenté, configuré pour coopérer avec un arbre d'entrée, non représenté, du réducteur 19, dans une configuration assemblée de l'actionneur électromécanique 11.

Des moyens de commande de l'actionneur électromécanique 11, permettant le déplacement de l'écran 2 du dispositif d'occultation 3, comprennent au moins l'unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11 ou l'une des unités de commande locale 12 ou centrale 13.

Le module de réception d'ordres peut également permettre la réception d'ordres transmis par des moyens filaires.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 comprend également un carter 17, en particulier de forme tubulaire.

Le carter 17 de l'actionneur électromécanique 11 est, préférentiellement, de forme cylindrique et, plus particulièrement, de section circulaire.

Dans un mode de réalisation, le carter 17 est réalisé dans un matériau électriquement conducteur, notamment métallique.

La matière du carter de l'actionneur électromécanique n'est pas limitative et peut être différente. Il peut, en particulier, s'agir d'une matière plastique.

Le carter 17 est creux et configuré pour loger l'unité électronique de contrôle 15, le moteur électrique 16 et le réducteur 19. En outre, le carter 17 peut, éventuellement, être configuré pour loger en partie l'arbre de sortie 20.

Le carter 17 comprend une première extrémité 17a et une deuxième extrémité 17b. La deuxième extrémité 17b est opposée à la première extrémité 17a.

L'arbre de sortie 20 de l'actionneur électromécanique 11 dépasse du carter 17 au niveau de la première extrémité 17a du carter 17, dans la configuration assemblée de l'actionneur électromécanique 11.

Ainsi, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, l'arbre de sortie 20 de l'actionneur électromécanique 11 est accouplé, par un élément de liaison 22, au tube d'enroulement 4, en particulier un élément de liaison en forme de roue.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique à partir du réseau d'alimentation électrique du secteur.

Avantageusement, l'actionneur électromécanique 11 comprend également un frein 24.

Ici, le frein 24 de l'actionneur électromécanique 11 fait partie intégrante de l'ensemble 27.

A titre d'exemple nullement limitatif, le frein 24 peut être un frein à ressort, un frein à came ou un frein électromagnétique.

Avantageusement, l'actionneur électromécanique 11 peut également comprendre un dispositif de détection de fin de course et/ou d'obstacle, pouvant être mécanique ou électronique.

L'actionneur électromécanique 11 comprend également un élément d'obturation 21 de la deuxième extrémité 17b du carter 17.

L'élément d'obturation 21 dépasse du carter 17 au niveau de la deuxième extrémité 17b du carter 17, dans la configuration assemblée de l'actionneur électromécanique 11.

En pratique, l'élément d'obturation 21 est disposé à une extrémité de l'actionneur électromécanique 11 opposée à celle au niveau de laquelle l'arbre de sortie 20 fait saillie à partir du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Avantageusement, l'élément d'obturation 21 est réalisé en matière plastique et, plus particulièrement, par moulage.

Dans l'exemple de réalisation illustré aux figures 3 à 6 et 10 à 11, l'élément d'obturation 21 est une unique pièce, en particulier de type monobloc.

Ici, l'élément d'obturation 21 est une pièce de révolution.

L'élément d'obturation 21 comprend une première partie 21a configurée pour coopérer avec le carter 17 de l'actionneur électromécanique 11 et une deuxième partie 21b configurée pour coopérer avec le support 23.

Au moins la première partie 21a de l'élément d'obturation 21 est de forme générale cylindrique et est disposée à l'intérieur du carter 17 de l'actionneur électromécanique 11, dans la configuration assemblée de l'actionneur électromécanique 11.

Avantageusement, l'élément d'obturation 21 comprend une butée 25 configurée pour coopérer avec le carter 17, au niveau de la deuxième extrémité 17b du carter 17, dans la configuration assemblée de l'actionneur électromécanique 11, en particulier par l'intermédiaire d'une couronne 28.

Ainsi, la butée 25 de l'élément d'obturation 21 permet de limiter l'enfoncement de la première partie 21a de l'élément d'obturation 21 dans le carter 17.

En outre, la butée 25 de l'élément d'obturation 21 délimite les première et deuxième parties 21a, 21b de l'élément d'obturation 21.

Ainsi, seule la première partie 21a de l'élément d'obturation 21 est disposée à l'intérieur du carter 17 de l'actionneur électromécanique 11, suite à l'emmanchement de l'élément d'obturation 21 à l'intérieur du carter 17, jusqu'à la butée 25.

Ici, la butée 25 de l'élément d'obturation 21 est réalisée sous la forme d'une collerette, en particulier de forme cylindrique et plane.

En variante, non représentée, l'élément d'obturation 21 comprend au moins deux pièces. La première pièce de l'élément d'obturation 21 comprend la première partie 21a de l'élément d'obturation 21 configurée pour coopérer avec le carter 17 de l'actionneur électromécanique 11. La deuxième pièce de l'élément d'obturation 21 comprend la deuxième partie 21b de l'élément d'obturation 21 configurée pour coopérer avec le support 23.

Avantageusement, l'actionneur électromécanique 11 comprend la couronne 28. La couronne 28 est disposée autour du carter 17 de l'actionneur électromécanique 11 et au niveau de la deuxième extrémité 17b du carter 17.

Ici, le tube d'enroulement 4 est entraîné en rotation autour de l'axe de rotation X et du carter 17 de l'actionneur électromécanique 11 soutenu par l'intermédiaire de deux liaisons pivot. La première liaison pivot est réalisée au niveau d'une première extrémité du tube d'enroulement 4 au moyen de la couronne 28. La couronne 28 permet ainsi de réaliser un palier. La deuxième liaison pivot, non représentée, est réalisée au niveau d'une deuxième extrémité du tube d'enroulement 4.

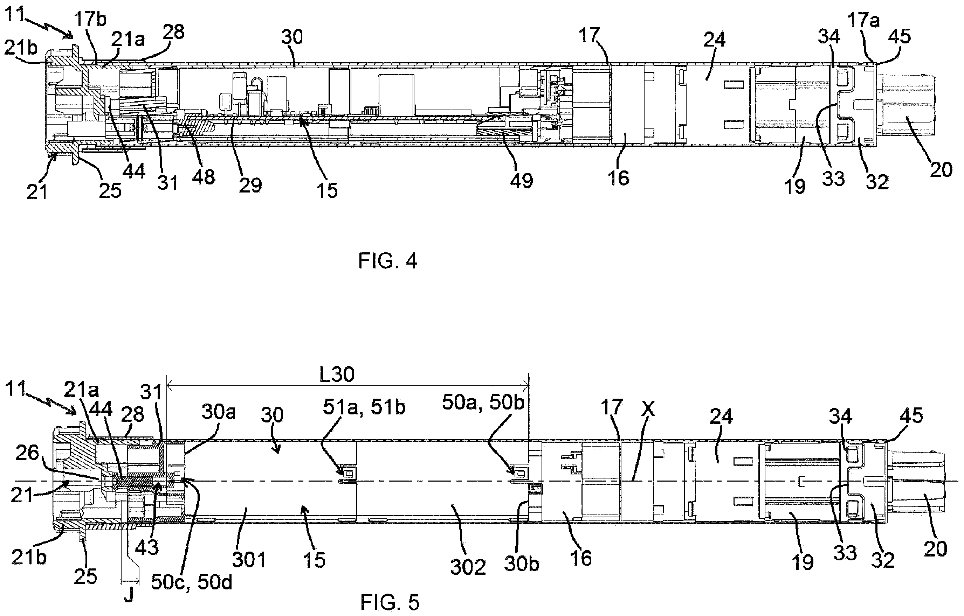

L'actionneur électromécanique 11 comprend également un élément d'interface 31, comme illustré aux figures 4 à 7, 10 et 11. L'élément d'interface 31 est disposé entre l'élément d'obturation 21 et, plus particulièrement, la première partie 21a de l'élément d'obturation 21, et l'unité électronique de contrôle 15, suivant la direction de l'axe de rotation X.

Ici, l'élément d'interface 31 de l'actionneur électromécanique 11 fait partie intégrante de l'ensemble 27.

Ici, et tel qu'illustré aux figures 4 et 5, l'unité électronique de contrôle 15, le moteur électrique 16, le réducteur 19, l'élément d'interface 31 et le frein 24 sont disposés à l'intérieur du carter 17 de l'actionneur électromécanique 11.

Préférentiellement, les organes 31, 15, 16, 19, 24, 20 de l'ensemble 27 sont assemblés entre eux dans un ordre prédéterminé. L'ordre prédéterminé d'assemblage des organes 31, 15, 16, 19, 24, 20 de l'ensemble 27 comprend en premier lieu l'assemblage de l'élément d'interface 31 avec l'unité électronique de contrôle 15, puis l'assemblage de l'unité électronique de contrôle 15 avec le moteur électrique 16, puis l'assemblage du moteur électrique 16 avec le réducteur 19 et l'assemblage du réducteur 19 avec l'arbre de sortie 20.

Dans l'exemple de réalisation illustré aux figures 3 à 5 et 11, le frein 24 est disposé entre le moteur électrique 16 et le réducteur 19.

En variante, non représentée, le frein 24 est disposé entre le réducteur 19 et l'arbre de sortie 20.

Ici, chaque organe 31, 15, 16, 19, 24, 20 de l'ensemble 27 présente un axe qui est confondu avec l'axe de rotation X, dans la configuration assemblée de l'actionneur électromécanique 11. L'axe de chacun des organes 15, 16, 19, 24, 20 de l'ensemble 27 n'est pas représenté sur les figures 3 à 11, de sorte à simplifier la lecture de celles-ci.

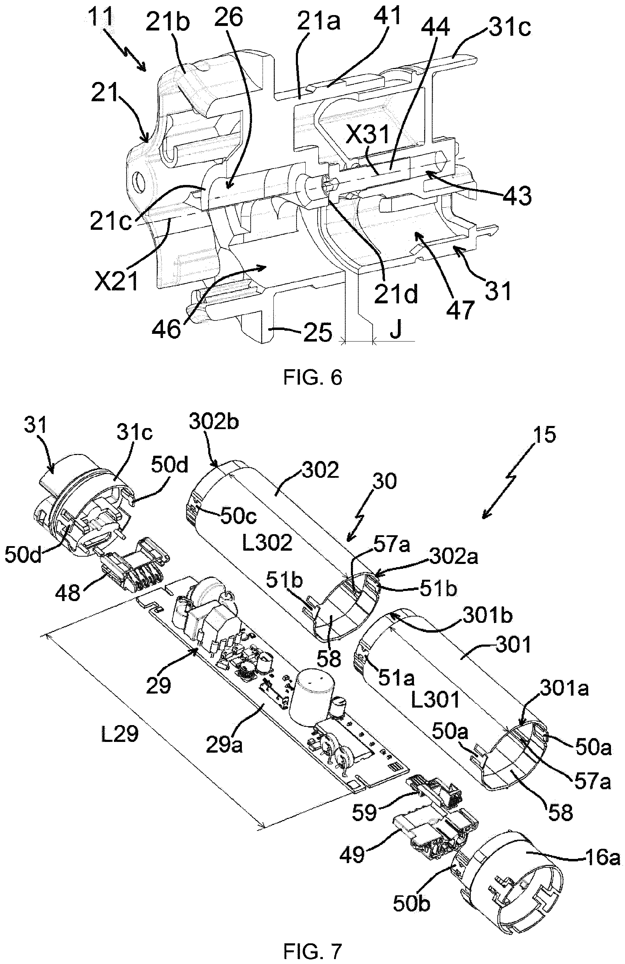

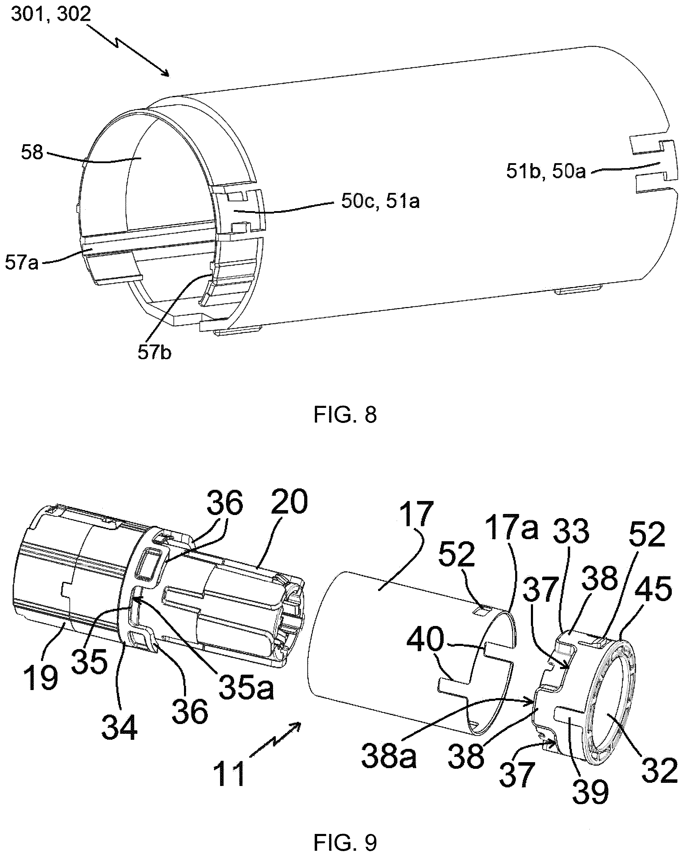

On décrit à présent, plus en détail et en référence aux figures 7 et 8, l'unité électronique de contrôle 15 appartenant à l'actionneur électromécanique 11 des figures 3 à 5.

L'unité électronique de contrôle 15 comprend un boîtier 30 et une carte électronique 29. La carte électronique 29 est disposée à l'intérieur du boîtier 30, dans la configuration assemblée de l'unité électronique de contrôle 15.

Ainsi, le boîtier 30 de l'unité électronique de contrôle 15 permet de protéger la carte électronique 29, lors de l'assemblage de l'actionneur électromécanique 11 et suite à l'assemblage de ce dernier, ainsi que d'assurer la rigidité de l'ensemble 27.

En outre, le boîtier 30 de l'unité électronique de contrôle 15 permet d'isoler électriquement la carte électronique 29 par rapport au carter 17.

Préférentiellement, le diamètre extérieur du boîtier 30 de l'unité électronique de contrôle 15 est inférieur au diamètre intérieur du carter 17 de l'actionneur électromécanique 11, de sorte que le boîtier 30 puisse être inséré dans le carter 17 de l'actionneur électromécanique 11, lors de l'assemblage de l'actionneur électromécanique 11.

Le boîtier 30 de l'unité électronique de contrôle 15 comprend un premier tronçon 301, réalisé sous la forme d'un premier tube creux, et un deuxième tronçon 302, réalisé sous la forme d'un deuxième tube creux.

Les premier et deuxième tronçons 301, 302 sont configurés pour loger la carte électronique 29, dans une configuration assemblée de l'unité électronique de contrôle 15.

En outre, le premier tronçon 301 du boîtier 30 comprend des premiers éléments de fixation 51a configurés pour coopérer avec des premiers éléments de fixation 51b du deuxième tronçon 302 du boîtier 30, dans la configuration assemblée de l'unité électronique de contrôle 15.

Ainsi, l'obtention du boîtier 30 au moyen des premier et deuxième tronçons 301, 302, réalisés sous la forme d'un tube creux, permet d'adapter la longueur L30 du boîtier 30 en fonction de la longueur L29 de la carte électronique 29 au moyen d'au moins l'un des premier et deuxième tronçons 301, 302, tout en s'affranchissant de défauts de fabrication. Les longueurs L29, L30 sont mesurées parallèlement à l'axe de rotation X, dans la configuration assemblée de l'actionneur électromécanique 11.

En outre, l'obtention du boîtier 30 au moyen des premier et deuxième tronçons 301, 302, réalisés sous la forme d'un tube creux, permet de garantir la protection de la carte électronique 29, lors de l'assemblage de l'unité électronique de contrôle 15 à l'intérieur du carter 17 de l'actionneur électromécanique 11, en particulier d'éviter une déformation de la carte électronique 29.

Par ailleurs, les premiers éléments de fixation 51a, 51b des premier et deuxième tronçons 301, 302 du boîtier 30 permettent de solidariser en rotation et en translation ces premier et deuxième tronçons 301, 302 entre eux.

En outre, l'assemblage des premier et deuxième tronçons 301, 302 du boîtier 30 de l'unité électronique de contrôle 15 au moyen des premiers éléments de fixation 51a, 51b peut être mis en oeuvre de manière automatique.

Par conséquent, le coût d'obtention du boîtier 30 de l'unité électronique de contrôle 15 est moins onéreux qu'un boîtier d'une unité électronique de contrôle comprenant deux demi-coques pour lequel un assemblage manuel est nécessaire, tel que celui décrit dans le document FR 2 983 368 A1.

Préférentiellement, les premiers éléments de fixation 51a, 51b des premier et deuxième tronçons 301, 302 du boîtier 30 sont des éléments de fixation par encliquetage élastique.

Ici, les premiers éléments de fixation 51a, 51b par encliquetage élastique des premier et deuxième tronçons 301, 302 du boîtier 30 sont réalisés au moyen de languettes et de pions.

En référence aux figures 5 et 11, chaque languette comprend une ouverture configurée pour coopérer avec un pion.

En variante et comme représenté aux figures 7 et 8, chaque languette 51b est configurée pour coopérer avec deux pions d'un élément de fixation complémentaire 51a. Avantageusement, la languette 51b présente une forme en « T ». Autrement dit, la languette 51b comprend une première branche et une deuxième branche reliées l'une à l'autre. La deuxième branche est disposée de part et d'autre de la première branche. Ici, la deuxième branche est perpendiculaire à la première branche. En outre, chaque pion est configuré pour se loger au niveau d'un angle distinct formé par la première branche et la deuxième branche de la languette.

Chacun des premier et deuxième tronçons 301, 302 du boîtier 30 est, préférentiellement, de forme cylindrique et, plus particulièrement, de section circulaire.

Ici, le premier tronçon 301 du boîtier 30 comprend une première extrémité 301a configurée pour coopérer avec le moteur électrique 16 et, en particulier un capot 16a du moteur électrique 16. Le premier tronçon 301 du boîtier 30 comprend également une deuxième extrémité 301b, opposée à la première extrémité 301a, configurée pour coopérer avec une première extrémité 302a du deuxième tronçon 302 du boîtier 30. En outre, le deuxième tronçon 302 du boîtier 30 comprend une deuxième extrémité 302b, opposée à la première extrémité 302a, configurée pour coopérer avec l'élément d'interface 31.

Avantageusement, le premier tronçon 301 du boîtier 30 comprend des deuxièmes éléments de fixation 50a configurés pour coopérer avec des premiers éléments de fixation 50b du moteur électrique 16, dans la configuration assemblée de l'actionneur électromécanique 11. En outre, le deuxième tronçon 302 du boîtier 30 comprend des deuxièmes éléments de fixation 50c configurés pour coopérer avec des premiers éléments de fixation 50d de l'élément d'interface 31, dans la configuration assemblée de l'actionneur électromécanique 11.

Ainsi, les premier et deuxième tronçons 301, 302 du boîtier 30 sont assemblés avec le moteur électrique 16 et l'élément d'interface 31, en particulier avant l'introduction de ces éléments 30, 16, 31 et, plus particulièrement, de l'ensemble 27 à l'intérieur du carter 17, de sorte à faciliter les opérations de manipulation et d'assemblage de l'actionneur électromécanique 11.

Préférentiellement, les deuxièmes éléments de fixation 50a, 50c des premier et deuxième tronçons 301, 302 du boîtier 30 et les premiers éléments de fixation 50b, 50d du moteur électrique 16 et de l'élément d'interface 31 sont des éléments de fixation par encliquetage élastique.

Ici, les deuxièmes éléments de fixation 50a, 50c des premier et deuxième tronçons 301, 302 du boîtier 30 et les premiers éléments de fixation 50b, 50d du moteur électrique 16 et de l'élément d'interface 31 par encliquetage élastique sont réalisés au moyen de languettes et de pions.

En référence aux figures 5 et 11, chaque languette 50a, 50d comprend une ouverture configurée pour coopérer avec un pion.

En variante et comme représenté aux figures 7 et 8, chaque languette 50a, 50d est configurée pour coopérer avec deux pions. Avantageusement, la languette 50a, 50d présente une forme en « T ». Autrement dit, la languette 50a, 50d comprend une première branche et une deuxième branche reliée l'une à l'autre. La deuxième branche est disposée de part et d'autre de la première branche. Ici, la deuxième branche est perpendiculaire à la première branche. En outre, chaque pion est configuré pour se loger au niveau d'un angle distinct formé par la première branche et la deuxième branche de la languette.

Préférentiellement, les premier et deuxième tronçons 301, 302 du boîtier 30 sont dans une matière plastique. En outre, les premier et deuxième tronçons 301, 302 du boîtier 30 sont obtenus selon une technique d'injection de matière plastique.

Ainsi, la fabrication des premier et deuxième tronçons 301, 302 du boîtier 30, selon une technique d'injection de matière plastique, permet de garantir un niveau de conformité élevé des premier et deuxième tronçons 301, 302 et de réduire les intervalles de tolérance des cotes associées aux premier et deuxième tronçons 301, 302, de sorte à améliorer la précision de l'assemblage de l'unité électronique de contrôle 15, ainsi que de l'actionneur électromécanique 11.

En outre, la fabrication des premier et deuxième tronçons 301, 302 du boîtier 30, selon une technique d'injection de matière plastique, permet d'intégrer les premiers et deuxièmes éléments de fixation 50a, 51a, 51b, 50c aux premier et deuxième tronçons 301, 302.

Préférentiellement, les premier et deuxième tronçons 301, 302 du boîtier 30 comprennent respectivement les mêmes premiers et deuxièmes éléments de fixation 50a, 51a, 51b, 50c.

Ainsi, les premier et deuxième tronçons 301, 302 du boîtier 30 sont des éléments modulaires et peuvent être intervertis.

De cette manière, les premiers et deuxièmes éléments de fixation 50a, 51a, 51b, 50c de chacun des premier et deuxième tronçons 301, 302 du boîtier 30 sont identiques.

En outre, au moins l'un des premier et deuxième tronçons 301, 302 du boîtier 30 peut être ajouté ou retiré, lors de l'assemblage de l'unité électronique de contrôle 15, de sorte à adapter la longueur L30 du boîtier 30 de l'unité électronique de contrôle 15 en fonction de la longueur L29 de la carte électronique 29.

Ici, les premier et deuxième tronçons 301, 302 du boîtier 30 sont identiques et présentent des longueurs L301, L302 identiques.

Ainsi, un tel boîtier 30 réalisé au moyen de premier et deuxième tronçons 301, 302 identiques permet de réduire les coûts d'obtention de l'unité électronique de contrôle 15 et de simplifier l'industrialisation de l'actionneur électromécanique 11.

En variante, non représentée, les premier et deuxième tronçons 301, 302 du boîtier 30 présentent des longueurs L301, L302 différentes.

Préférentiellement, chacun des premier et deuxième tronçons 301, 302 du boîtier 30 comprend une première rainure 57a et une deuxième rainure 57b configurées pour maintenir en position la carte électronique 29 à l'intérieur du boîtier 30, dans la configuration assemblée de l'unité électronique de contrôle 15.

De cette manière, lors de l'assemblage de l'unité électronique de contrôle 15 et, en particulier, suite à l'assemblage des premier et deuxième tronçons 301, 302 du boîtier 30, la carte électronique 29 est insérée à l'intérieur du boîtier 30 par coulissement. Le coulissement de la carte électronique 29 à l'intérieur du boîtier 30 est mis en oeuvre par le guidage d'une plaquette de circuit imprimé 29a de la carte électronique 29 à l'intérieur des première et deuxième rainures 57a, 57b de chacun des premier et deuxième tronçons 301, 302 du boîtier 30.

Les premier et deuxième tronçons 301, 302, réalisés respectivement sous la forme d'un tube creux, formant le boîtier 30 de l'unité électronique de contrôle 15 comprennent ainsi des éléments 57a, 57b de positionnement et de maintien de la carte électronique 29 simples et ne nécessitant pas une cotation fonctionnelle précise.

Par conséquent, le coût d'obtention du boîtier 30 de l'unité électronique de contrôle 15 est moins onéreux qu'un boîtier d'une unité électronique de contrôle comprenant deux demi-coques, tel que celui décrit dans le document FR 2 983 368 A1.

Par ailleurs, les premier et deuxième tronçons 301, 302 permettent de réaliser une entretoise par l'intermédiaire des première et deuxième rainures 57a, 57b, de sorte à isoler électriquement la carte électronique 29 par rapport au carter 17 de l'actionneur électromécanique 11.

En pratique, les première et deuxième rainures 57a, 57b sont ménagées respectivement au niveau d'une surface interne 58 de chacun des premier et deuxième tronçons 301, 302 du boîtier 30.

Avantageusement, la première rainure 57a est diamétralement opposée à la deuxième rainure 57b, pour chacun des premier et deuxième tronçons 301, 302 du boîtier 30.

Préférentiellement, dans une configuration assemblée des premier et deuxième tronçons 301, 302 du boîtier 30, la première rainure 57a du premier tronçon 301 est alignée avec la première rainure 57a du deuxième tronçon 302. En outre, la deuxième rainure 57b du premier tronçon 301 est alignée avec la deuxième rainure 57b du deuxième tronçon 302.

Avantageusement, le moteur électrique 16 comprend un connecteur électrique 49 configuré pour coopérer avec la carte électronique 29 de l'unité électronique de contrôle 15, dans la configuration assemblée de l'actionneur électromécanique 11.

En outre, l'élément d'interface 31 comprend un premier connecteur électrique 48 configuré pour coopérer avec la carte électronique 29 de l'unité électronique de contrôle 15, dans la configuration assemblée de l'actionneur électromécanique 11.

Ici, le connecteur électrique 49 du moteur électrique 16 et le premier connecteur électrique 48 de l'élément d'interface 31 sont des connecteurs électriques configurés, d'une part, pour s'enficher sur un bord de la plaquette de circuit imprimé 29a de la carte électronique 29 et, d'autre part, pour coopérer avec des pistes électriques de la carte électronique 29.

En outre, l'assemblage de l'unité électronique de contrôle 15 avec le moteur électrique 16 et l'élément d'interface 31 au moyen des éléments de fixation 50a, 50b, 50c, 50d et l'assemblage des connecteurs électriques 48, 49 sur la plaquette de circuit imprimé 29a de la carte électronique 29 permettent de former une liaison électrique de la carte électronique 29 vers le moteur électrique 16 au moyen du connecteur électrique 49 et de former une liaison électrique de la carte électronique 29 vers l'élément d'interface 31 au moyen du premier connecteur électrique 48 sans câbles électriques.

De cette manière, ces liaisons électriques sont mises en oeuvre uniquement au moyen des connecteurs électriques 48, 49 enfichés sur un bord de la plaquette de circuit imprimé 29a de la carte électronique 29.

Avantageusement, le moteur électrique 16 comprend une carte électronique additionnelle, non représentée, et, en particulier disposée à l'intérieur du capot 16a du moteur électrique 16. En outre, le moteur électrique 16 comprend un connecteur électrique additionnel 59 configuré pour coopérer, d'une part, avec la carte électronique 29 de l'unité électronique de contrôle 15 et, d'autre part, avec la carte électronique additionnelle du moteur électrique 16, dans la configuration assemblée de l'actionneur électromécanique 11.

Par ailleurs, l'assemblage de l'unité électronique de contrôle 15 avec le moteur électrique 16 au moyen des éléments de fixation 50a, 50b et l'assemblage du connecteur électrique additionnel 59 avec la plaquette de circuit imprimé 29a de la carte électronique 29 permet de former une liaison électrique de la carte électronique 29 de l'unité électronique de contrôle 15 vers la carte électronique additionnelle du moteur électrique 16 au moyen du connecteur électrique additionnel 59 sans câbles électriques.

De cette manière, cette liaison électrique est mise en oeuvre uniquement au moyen du connecteur électrique additionnel 59 enfiché sur un bord de la plaquette de circuit imprimé 29a de la carte électronique 29 et relié électriquement à la carte électronique additionnelle du moteur électrique 16.

Dans l'exemple de réalisation illustré à la figure 7, le connecteur électrique additionnel 59 du moteur électrique 16 est configuré pour être fixé sur le connecteur électrique 49 du moteur électrique 16 au moyen d'éléments de fixation, dans la configuration assemblée de l'actionneur électromécanique 11.

Ici, les éléments de fixation du connecteur électrique additionnel 59 avec le connecteur électrique 49 sont des éléments de fixation enfichables, en particulier une nervure configurée pour coulisser à l'intérieur d'une rainure.

Avantageusement, la carte électronique additionnelle du moteur électrique 16 permet de contrôler la position du rotor du moteur électrique 16. Une telle détermination de la position du rotor du moteur électrique 16 peut être mise en oeuvre soit au moyen de capteurs pouvant être, par exemple, des capteurs à effet Hall disposés sur la carte électronique additionnelle, soit au moyen d'un dispositif de détermination d'une grandeur physique, en particulier le courant électrique traversant le moteur électrique 16 lors de son fonctionnement.

Avantageusement, la carte électronique additionnelle du moteur électrique 16 est disposée de manière perpendiculaire à la carte électronique 29 de l'unité électronique de contrôle 15, dans la configuration assemblée de l'actionneur électromécanique 11.

Ainsi, la carte électronique additionnelle du moteur électrique 16 s'étend suivant un plan perpendiculaire à un plan passant par la carte électronique 29 de l'unité électronique de contrôle 15, dans la configuration assemblée de l'actionneur électromécanique 11.

On décrit à présent, en référence aux figures 3 à 11, les différents organes de l'actionneur électromécanique 11 appartenant à l'installation domotique des figures 1 et 2.

Avantageusement, le moteur électrique 16 présente un corps 16c, comme illustré à la figure 11. En outre, le corps 16c du moteur électrique 16 est, préférentiellement, de forme cylindrique et, plus particulièrement, de section circulaire.

Préférentiellement, le diamètre extérieur du corps 16c du moteur électrique 16 est inférieur au diamètre intérieur du carter 17 de l'actionneur électromécanique 11, de sorte que le corps 16c du moteur électrique 16 puisse être inséré dans le carter 17 de l'actionneur électromécanique 11, lors de l'assemblage de l'actionneur électromécanique 11.

Avantageusement, le réducteur 19 présente un corps 19c, comme illustré à la figure 11. En outre, le corps 19c du réducteur 19 est, préférentiellement, de forme cylindrique et, plus particulièrement, de section circulaire.

Préférentiellement, le diamètre extérieur du corps 19c du réducteur 19 est inférieur au diamètre intérieur du carter 17 de l'actionneur électromécanique 11, de sorte que le corps 19c du réducteur 19 puisse être inséré dans le carter 17 de l'actionneur électromécanique 11, lors de l'assemblage de l'actionneur électromécanique 11.

Avantageusement, l'élément d'interface 31 présente un corps 31c, comme illustré aux figures 6 et 11. En outre, le corps 31c de l'élément d'interface 31 est, préférentiellement, de forme cylindrique et, plus particulièrement, de section circulaire.

Préférentiellement, le diamètre extérieur du corps 31c de l'élément d'interface 31 est inférieur au diamètre intérieur du carter 17 de l'actionneur électromécanique 11, de sorte que le corps 31c de l'élément d'interface 31 puisse être inséré dans le carter 17 de l'actionneur électromécanique 11, lors de l'assemblage de l'actionneur électromécanique 11.

Avantageusement, le frein 24 présente un corps 24c, comme illustré à la figure 11. En outre, le corps 24c du frein 24 est, préférentiellement, de forme cylindrique et, plus particulièrement, de section circulaire.

Préférentiellement, le diamètre extérieur du corps 24c du frein 24 est inférieur au diamètre intérieur du carter 17 de l'actionneur électromécanique 11, de sorte que le corps 24c du frein 24 puisse être inséré dans le carter 17 de l'actionneur électromécanique 11, lors de l'assemblage de l'actionneur électromécanique 11.

Avantageusement, le corps 31c de l'élément d'interface 31, les premier et deuxième tronçons 301, 302 du boîtier 30 de l'unité électronique de contrôle 15, le corps 16c du moteur électrique 16, le corps 19c du réducteur 19 et, éventuellement, le corps 24c du frein 24 sont assemblés entre eux au moyen d'éléments de fixation 50a, 50b, 50c, 50d, 51a, 51b, en particulier par encliquetage élastique, de sorte à former l'ensemble 27.

Ainsi, les éléments de fixation 50a, 50b, 50c, 50d, 51a, 51b des différents organes 31, 15, 16, 19, 24 de l'ensemble 27 permettent de solidariser en rotation et en translation ces organes 31, 15, 16, 19, 24 entre eux.

De cette manière, suite à la fixation des organes 31, 15, 16, 19, 24 de l'ensemble 27 l'un par rapport à l'autre, les liaisons entre ces organes 31, 15, 16, 19, 24 de l'ensemble 27 sont sans débattement axial, hormis les tolérances d'assemblage des organes 31, 15, 16, 19, 24 l'un par rapport à l'autre.

En outre, l'assemblage des différents organes 31, 15, 16, 19, 24 de l'ensemble 27 au moyen des éléments de fixation 50a, 50b, 50c, 50d, 51a, 51b permet de pouvoir introduire, en une seule opération, l'ensemble 27 dans le carter 17, suivant un mouvement de translation.

Ici, les éléments de fixation 50a, 50b, 50c, 50d, 51a, 51b par encliquetage élastique sont réalisés au moyen de languettes et de pions.

Ici, l'un des organes de l'ensemble 27 est assemblé à un autre des organes de l'ensemble 27 au moyen des éléments de fixation 50a, 50b, 50c, 50d, 51a, 51b par encliquetage élastique, ces éléments de fixation 50a, 50b, 50c, 50d, 51a, 51b pouvant être au nombre de quatre et décalés angulairement d'un angle de 90° autour de l'axe de rotation X.

Le nombre et la position angulaire des éléments de fixation par encliquetage élastique entre deux des organes de l'ensemble ne sont pas limitatifs et peuvent être différents, en particulier, ces éléments de fixation peuvent être au nombre de trois et décalés angulairement d'un angle de 120° autour de l'axe de rotation.

Préférentiellement, le diamètre extérieur, respectivement, du corps 31c de l'élément d'interface 31, du boîtier 30 de l'unité électronique de contrôle 15, du corps 16c du moteur électrique 16, du corps 19c du réducteur 19 et du corps 24c du frein 24 présente une même valeur.

Avantageusement, l'actionneur électromécanique 11 comprend également un élément de maintien 32. L'élément de maintien 32 est assemblé au niveau de la première extrémité 17a du carter 17. L'élément de maintien 32 comprend une première butée 33 configurée pour coopérer avec l'ensemble 27 et, plus particulièrement, avec le réducteur 19, dans la configuration assemblée de l'actionneur électromécanique 11.

Dans l'exemple de réalisation illustré aux figures 4, 5, 9 et 11, l'ensemble 27 et, plus particulièrement, le réducteur 19 comprend un embout 34 configuré pour coopérer avec l'élément de maintien 32, au niveau de la première extrémité 17a du carter 17, dans la configuration assemblée de l'actionneur électromécanique 11. Sur la figure 9, seule une partie du carter 17 est représentée, à proximité de son extrémité 17a.

Ici, l'embout 34 comprend des encoches 35 et des languettes 36, disposées alternativement autour de l'axe de rotation X, configurées pour coopérer, respectivement, avec des languettes 38 et des encoches 37 de l'élément de maintien 32.

Ainsi, les languettes 38 de l'élément de maintien 32 sont configurées pour s'engager dans les encoches 35 de l'embout 34, dans la configuration assemblée de l'actionneur électromécanique 11. En outre, les languettes 36 de l'embout 34 sont configurées pour s'engager dans les encoches 37 de l'élément de maintien 32, dans la configuration assemblée de l'actionneur électromécanique 11.

Dans un tel cas, la première butée 33 de l'élément de maintien 32 configurée pour coopérer avec l'ensemble 27 et, plus particulièrement, avec le réducteur 19, dans la configuration assemblée de l'actionneur électromécanique 11, est réalisée par une paroi d'extrémité 38a de chacune des languettes 38, ces parois d'extrémité 38a venant en appui contre des parois de fond 35a de chacune des encoches 35 de l'embout 34.

Ici, l'embout 34 comprend quatre encoches 35 décalées angulairement d'un angle de 90°, autour de l'axe de rotation X, et quatre languettes 36 décalées angulairement d'un angle de 90°, autour de l'axe de rotation X. En outre, l'élément de maintien 32 comprend quatre encoches 37 décalées angulairement d'un angle de 90°, autour de l'axe de rotation X, et quatre languettes 38 décalées angulairement d'un angle de 90°, autour de l'axe de rotation X.

Le nombre et la position angulaire des encoches et des languettes de l'embout et de l'élément de maintien ne sont pas limitatifs et peuvent être différents, en particulier, ces encoches et languettes peuvent être au nombre de trois et décalées angulairement d'un angle de 120° autour de l'axe de rotation.

En outre, l'élément de maintien 32 comprend des crans 39, chacun en forme de saillie radiale, configurés pour coopérer avec des premières échancrures 40 du carter 17. Les premières échancrures 40 sont ménagées au niveau de la première extrémité 17a du carter 17.

Ici, l'élément de maintien 32 comprend deux crans 39 diamétralement opposés par rapport à l'axe de rotation X. En outre, le carter 17 comprend deux premières échancrures 40 diamétralement opposées par rapport à l'axe de rotation X.

De cette manière, un tel assemblage de l'embout 34, de l'élément de maintien 32 et du carter 17 permet de bloquer en rotation l'ensemble 27 par rapport au carter 17 et, plus particulièrement, le réducteur 19 par rapport au carter 17.

Avantageusement, l'élément de maintien 32 comprend une deuxième butée 45 configurée pour coopérer avec le carter 17, au niveau de la première extrémité 17a du carter 17, dans la configuration assemblée de l'actionneur électromécanique 11.

Ainsi, la deuxième butée 45 de l'élément de maintien 32 permet de limiter l'enfoncement de l'élément de maintien 32 dans le carter 17.

Ici, la deuxième butée 45 de l'élément de maintien 32 est réalisée sous la forme d'une collerette, en particulier de forme cylindrique et plane, perpendiculaire à l'axe de rotation X, dans la configuration assemblée de l'actionneur électromécanique 11.

Par ailleurs, l'élément de maintien 32 et le carter 17 sont également assemblés entre eux au moyen d'éléments de fixation 52, en particulier par encliquetage élastique.

Ainsi, l'assemblage de l'élément de maintien 32 avec le carter 17 permet de bloquer en translation l'élément de maintien 32 et, plus particulièrement, l'ensemble 27 par rapport au carter 17 et, plus particulièrement, par rapport à la première extrémité 17a du carter 17.

De cette manière, suite à la fixation de l'élément de maintien 32 par rapport au carter 17, l'élément de maintien 32 sert de butée pour l'ensemble 27, lors du coulissement de l'ensemble 27 à l'intérieur du carter 17, suivant la direction axiale de l'actionneur électromécanique 11, à partir de la deuxième extrémité 17b du carter 17 vers la première extrémité 17a du carter 17.

Par ailleurs, l'élément d'obturation 21 et, plus particulièrement, la première partie 21a de l'élément d'obturation 21 comprend des crans 41, chacun en forme de saillie radiale, configurés pour coopérer avec des deuxièmes échancrures 42 du carter 17. Les deuxièmes échancrures 42 sont ménagées au niveau de la deuxième extrémité 17b du carter 17.

Ici, la première partie 21a de l'élément d'obturation 21 comprend deux crans 41 diamétralement opposés par rapport à l'axe de rotation X. En outre, le carter 17 comprend deux deuxièmes échancrures 42 diamétralement opposées par rapport à l'axe de rotation X.

De cette manière, un tel assemblage de l'élément d'obturation 21 et du carter 17 permet de bloquer en rotation l'élément d'obturation 21 par rapport au carter 17.

Par ailleurs, l'élément d'obturation 21 et le carter 17 sont également assemblés entre eux au moyen d'éléments de fixation 53, en particulier par vissage.

De cette manière, l'assemblage de l'élément d'obturation 21 avec le carter 17 permet de bloquer en translation l'élément d'obturation 21 par rapport au carter 17 et, plus particulièrement, par rapport à la deuxième extrémité 17b du carter 17.

Ici, la fixation de l'élément d'obturation 21 avec le carter 17 est mise en œuvre au moyen de vis de fixation 53, pouvant être, par exemple, de type auto-taraudeuse. Dans la configuration assemblée de l'actionneur électromécanique 11, les vis de fixation 53 traversent des trous de passage 54 ménagés dans le carter 17 et sont vissées dans des trous de fixation 55 de l'élément d'obturation 21. En outre, les vis de fixation 53 traversent des trous de passage 56 ménagés dans la couronne 28.

En variante, non représentée, les éléments de fixation de l'élément d'obturation 21 avec le carter 17 peuvent être des rivets ou des éléments de fixation par encliquetage élastique.

Un tel assemblage de l'actionneur électromécanique 11 permet de prévoir un jeu J, en particulier axial, entre l'élément d'obturation 21 et l'élément d'interface 31, suivant la direction axiale de l'actionneur électromécanique 11, comme illustré aux figures 5 et 6.

Le jeu J permet de garantir l'assemblage de l'élément d'obturation 21 par rapport au carter 17.

Ici et de manière nullement limitative, le jeu J entre l'élément d'obturation 21 et l'élément d'interface 31, suivant la direction axiale de l'actionneur électromécanique 11, peut être de l'ordre de plus ou moins deux millimètres.

Avantageusement, l'élément d'interface 31 comprend un premier logement 43 à l'intérieur duquel est disposé un élément d'inhibition 44 du jeu J entre l'élément d'obturation 21 et l'élément d'interface 31, suivant la direction axiale de l'actionneur électromécanique 11.

Ainsi, l'élément d'inhibition 44 du jeu J entre l'élément d'obturation 21 et l'élément d'interface 31, suivant la direction axiale de l'actionneur électromécanique 11, permet d'améliorer la tenue des organes 31, 15, 16, 19, 24, 20 de l'actionneur électromécanique 11 disposés à l'intérieur du carter 17 et de s'affranchir du risque de déconnexion électrique de l'unité électronique de contrôle 15 par rapport au câble d'alimentation électrique 18 et par rapport au moteur électrique 16, notamment lors d'un choc de l'actionneur électromécanique 11, pouvant intervenir lors d'une manipulation ou du transport de l'actionneur électromécanique 11, ou lors d'un fonctionnement anormal de l'actionneur électromécanique 11.

De cette manière, une telle construction de l'actionneur électromécanique 11 permet d'inhiber le jeu J entre l'élément d'obturation 21 et l'élément d'interface 31, suivant la direction axiale de l'actionneur électromécanique 11, suite à l'assemblage de l'actionneur électromécanique 11, de sorte à garantir un état fonctionnel de l'actionneur électromécanique 11, au cours des différentes phases de vie de l'actionneur électromécanique 11.

En outre, l'élément d'inhibition 44 permet de bloquer en translation l'élément d'interface 31 par rapport à l'élément d'obturation 21.

Ici, le premier logement 43 de l'élément d'interface 31 est de forme générale cylindrique, centré sur un axe longitudinal X31 de l'élément d'interface 31.

Par ailleurs, l'axe longitudinal X31 de l'élément d'interface 31 est confondu avec l'axe de rotation X du moteur électrique 16 de l'actionneur électromécanique 11, ou encore l'axe de rotation du tube d'enroulement 4, en configuration montée du dispositif d'entraînement motorisé 5.

Préférentiellement, l'élément d'obturation 21 comprend un premier logement 26 débouchant au niveau d'une première face 21c de l'élément d'obturation 21 et au niveau d'une deuxième face 21d de l'élément d'obturation 21.

Le premier logement 26 de l'élément d'obturation 21 est disposé en vis-à-vis de l'élément d'inhibition 44, dans la configuration assemblée de l'actionneur électromécanique 11, de sorte à permettre un ajustement en position de l'élément d'inhibition 44 à partir de l'extérieur de l'élément d'obturation 21.

Ainsi, le réglage en position de l'élément d'inhibition 44 par rapport à l'élément d'interface 31 et à l'élément d'obturation 21, suivant la direction axiale de l'actionneur électromécanique 11, peut être mis en œuvre à partir de l'extérieur de l'élément d'obturation 21 et, plus particulièrement, de l'actionneur électromécanique 11, en manœuvrant l'élément d'inhibition 44 au moyen d'un outil, non représenté, tel qu'un tournevis, qui traverse le premier logement 26 de l'élément d'obturation 21, comme expliqué ci-après.

De cette manière, le positionnement de l'élément d'inhibition 44 par rapport à l'élément d'interface 31 et à l'élément d'obturation 21, suivant la direction axiale de l'actionneur électromécanique 11, peut être mis en œuvre en fonction de la valeur du jeu J, sans avoir à démonter un ou plusieurs éléments de l'actionneur électromécanique 11.

Ici, le premier logement 26 de l'élément d'obturation 21 est de forme générale cylindrique, centré sur un axe longitudinal X21 de l'élément d'obturation 21.

Par ailleurs, l'axe longitudinal X21 de l'élément d'obturation 21 est confondu avec l'axe de rotation X du moteur électrique 16 de l'actionneur électromécanique 11, ou encore l'axe de rotation du tube d'enroulement 4, en configuration montée du dispositif d'entraînement motorisé 5. En outre, l'axe longitudinal X21 de l'élément d'obturation 21 est confondu avec l'axe longitudinal X31 de l'élément d'interface 31, dans la configuration assemblée de l'actionneur électromécanique 11.

Avantageusement, l'élément d'inhibition 44 est configuré pour coopérer avec une face de l'élément d'obturation 21 et, plus particulièrement, la deuxième face 21d de l'élément d'obturation 21, suite à un ajustement en position de l'élément d'inhibition 44 par rapport à l'élément d'obturation 21, suivant la direction axiale de l'actionneur électromécanique 11, de sorte à inhiber le jeu J entre l'élément d'obturation 21 et l'élément d'interface 31.

Ainsi, l'inhibition du jeu J entre l'élément d'obturation 21 et l'élément d'interface 31 est mis en œuvre par le réglage en position de l'élément d'inhibition 44 par rapport à l'élément d'interface 31 et à l'élément d'obturation 21, suivant la direction axiale de l'actionneur électromécanique 11 et, plus particulièrement, la mise en appui de l'élément d'inhibition 44 contre la deuxième face 21d de l'élément d'obturation 21.

Préférentiellement, l'élément d'inhibition 44 est une vis. En outre, le premier logement 43 de l'élément d'interface 31 est un alésage.

Ici, l'élément d'inhibition 44 est une vis présentant un filetage métrique. En outre, le premier logement 43 de l'élément d'interface 31 est un alésage taraudé.

En variante, non représentée, l'élément d'inhibition 44 est une vis auto-taraudeuse. Dans ce cas, le premier logement 43 de l'élément d'interface 31 est un alésage lisse.

Dans un exemple de réalisation, la vis formant l'élément d'inhibition 44 est une vis identique aux vis formant les éléments de fixation 53 de l'élément d'obturation 21 avec le carter 17.

Ainsi, le nombre de modèles de vis pour la fabrication de l'actionneur électromécanique 11 est limité, de sorte à simplifier l'industrialisation et à éviter des risques d'erreur de référence.

En pratique, une tête de la vis formant l'élément d'inhibition 44 est configurée pour coopérer avec la deuxième face 21d de l'élément d'obturation 21, suite à un dévissage de la vis 44 par rapport à l'alésage 43 de l'élément d'interface 31, de sorte à inhiber le jeu J entre l'élément d'obturation 21 et l'élément d'interface 31.

Avantageusement, le premier logement 26 ménagé dans l'élément d'obturation 21 permet le passage d'un outil, en particulier d'un tournevis, de sorte à atteindre l'élément d'inhibition 44 et, plus particulièrement, permettre le dévissage de la vis formant l'élément d'inhibition 44.

Préférentiellement, l'élément d'inhibition 44 est assemblé sur l'élément d'interface 31 avant l'introduction de l'ensemble 27 à l'intérieur du carter 17.

Ainsi, l'opération d'assemblage de l'élément d'inhibition 44 sur l'élément d'interface 31 n'engendre pas un allongement du temps d'assemblage de l'ensemble 27 à l'intérieur du carter 17, puisque cette opération peut être mise en œuvre en temps masqué, au cours de la fabrication de l'actionneur électromécanique 11.

Ici, la vis 44 est vissée à l'intérieur du premier logement 43 de l'élément d'interface 31 avant l'introduction de l'ensemble 27 à l'intérieur du carter 17, en particulier jusqu'à la mise en appui de la tête de la vis 44 contre le rebord du premier logement 43 de l'élément d'interface 31.

Avantageusement, l'élément d'obturation 21 comprend un deuxième logement 46. Le deuxième logement 46 de l'élément d'obturation 21 est configuré pour permettre le passage du câble d'alimentation électrique 18.

En outre, l'élément d'interface 31 comprend un deuxième logement 47. Le deuxième logement 47 de l'élément d'interface 31 comprend en partie le premier connecteur électrique 48. Le premier connecteur électrique 48 ménagé dans le deuxième logement 47 de l'élément d'interface 31 est configuré pour coopérer avec un connecteur électrique du câble d'alimentation électrique 18.

Par ailleurs, le premier connecteur électrique 48 de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Ainsi, le connecteur électrique du câble d'alimentation électrique 18 est configuré pour coopérer avec le premier connecteur électrique 48 de l'élément d'interface 31, de sorte à alimenter en énergie électrique le moteur électrique 16, au moyen du câble d'alimentation électrique 18.

Dans un exemple de réalisation, non représenté, le deuxième logement 46 de l'élément d'obturation 21 est également configuré pour permettre le passage d'un câble d'échange de données.

Dans ce cas, l'élément d'interface 31 comprend un troisième logement. Le troisième logement de l'élément d'interface 31 comprend un deuxième connecteur électrique. Le deuxième connecteur électrique ménagé dans le troisième logement de l'élément d'interface 31 est configuré pour coopérer avec un connecteur électrique du câble d'échange de données.

Par ailleurs, toujours dans ce cas, le deuxième connecteur électrique de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Dans un tel cas où l'actionneur électromécanique 11 est relié au câble d'échange de données, celui-ci permet à l'unité électronique de contrôle 15 de recevoir et/ou d'émettre des données avec une unité de commande, en particulier avec l'unité de commande locale 12 et/ou l'unité de commande centrale 13, par une liaison filaire.

Ainsi, le connecteur électrique du câble d'échange de données est configuré pour coopérer avec le deuxième connecteur électrique de l'élément d'interface 31, de sorte à échanger des données entre au moins l'une des unités de commande 12, 13 et l'unité électronique de contrôle 15.

Grâce à la présente invention, l'obtention du boîtier au moyen des premier et deuxième tronçons, réalisés sous la forme d'un tube creux, permet d'adapter la longueur du boîtier en fonction de la longueur de la carte électronique, au moyen d'au moins l'un des premier et deuxième tronçons, tout en s'affranchissant de défauts de fabrication, en particulier dans le cas où le boîtier est réalisé au moyen d'un seul tronçon, réalisé sous la forme d'un tube creux.

En outre, l'obtention du boîtier au moyen des premier et deuxième tronçons, réalisés sous la forme d'un tube creux, permet de garantir la protection de la carte électronique, lors de l'assemblage de l'unité électronique de contrôle à l'intérieur du carter de l'actionneur électromécanique, en particulier d'éviter une déformation de la carte électronique.

De nombreuses modifications peuvent être apportées aux exemples de réalisation décrits précédemment sans sortir du cadre de l'invention telle que définie par les revendications annexées.

En variante, non représentée, le boîtier de l'unité électronique de contrôle comprend un nombre de tronçons, réalisés sous la forme d'un tube creux, supérieur ou égal à trois.

## Revendications

1. Actionneur électromécanique tubulaire (11) pour une installation domotique de fermeture ou de protection solaire, l'actionneur électromécanique (11) comprenant au moins :
- une unité électronique de contrôle (15), l'unité électronique de contrôle (15) comprenant un boîtier (30) et une carte électronique (29), la carte électronique (29) étant disposée à l'intérieur du boîtier (30), dans une configuration assemblée de l'unité électronique de contrôle (15),
- un moteur électrique (16),
- un réducteur (19),
- un arbre de sortie (20),
- un carter (17), le carter (17) étant creux et configuré pour loger au moins l'unité électronique de contrôle (15), le moteur électrique (16) et le réducteur (19), et
- un élément d'obturation (21), l'élément d'obturation (21) étant configuré pour obturer une extrémité (17b) du carter (17),
**caractérisé en ce que** :
- le boîtier (30) de l'unité électronique de contrôle (15) comprend au moins un premier tronçon (301), réalisé sous la forme d'un tube creux, et un deuxième tronçon (302), réalisé sous la forme d'un tube creux, les premier et deuxième tronçons (301, 302) étant configurés pour loger la carte électronique (29), dans la configuration assemblée de l'unité électronique de contrôle (15), et
- le premier tronçon (301) du boîtier (30) comprend des premiers éléments de fixation (51a) configurés pour coopérer avec des premiers éléments de fixation (51b) du deuxième tronçon (302) du boîtier (30), dans la configuration assemblée de l'unité électronique de contrôle (15).

2. Actionneur électromécanique tubulaire (11) pour une installation domotique de fermeture ou de protection solaire selon la revendication 1, **caractérisé en ce que** les premiers éléments de fixation (51a, 51b) des premier et deuxième tronçons (301, 302) du boîtier (30) sont des éléments de fixation par encliquetage élastique.

3. Actionneur électromécanique tubulaire (11) pour une installation domotique de fermeture ou de protection solaire selon la revendication 1 ou la revendication 2, **caractérisé en ce que** le premier tronçon (301) du boîtier (30) comprend des deuxièmes éléments de fixation (50a) configurés pour coopérer avec des premiers éléments de fixation (50b) du moteur électrique (16), dans une configuration assemblée de l'actionneur électromécanique (11).

4. Actionneur électromécanique tubulaire (11) pour une installation domotique de fermeture ou de protection solaire selon l'une quelconque des revendications 1 à 3, **caractérisé en ce que** le moteur électrique (16) comprend un connecteur électrique (49) configuré pour coopérer avec la carte électronique (29) de l'unité électronique de contrôle (15), dans une configuration assemblée de l'actionneur électromécanique (11).

5. Actionneur électromécanique tubulaire (11) pour une installation domotique de fermeture ou de protection solaire selon l'une quelconque des revendications 1 à 4, **caractérisé en ce que** l'actionneur électromécanique (11) comprend également un élément d'interface (31), l'élément d'interface (31) étant disposé entre l'élément d'obturation (21) et l'unité électronique de contrôle (15), et **en ce que** le deuxième tronçon (302) du boîtier (30) comprend des deuxièmes éléments de fixation (50c) configurés pour coopérer avec des premiers éléments de fixation (50d) de l'élément d'interface (31), dans une configuration assemblée de l'actionneur électromécanique (11).

6. Actionneur électromécanique tubulaire (11) pour une installation domotique de fermeture ou de protection solaire selon la revendication 3 et selon la revendication 5, **caractérisé en ce que** les premier et deuxième tronçons (301, 302) du boîtier (30) comprennent respectivement les mêmes premiers et deuxièmes éléments de fixation (50a, 51a, 51b, 50c).

7. Actionneur électromécanique tubulaire (11) pour une installation domotique de fermeture ou de protection solaire selon la revendication 5 ou selon la revendication 6, **caractérisé en ce que** l'élément d'interface (31) comprend un connecteur électrique (48) configuré pour coopérer avec la carte électronique (29) de l'unité électronique de contrôle (15), dans la configuration assemblée de l'actionneur électromécanique (11).

8. Actionneur électromécanique tubulaire (11) pour une installation domotique de fermeture ou de protection solaire selon l'une quelconque des revendications 1 à 7, **caractérisé en ce que** les premier et deuxième tronçons (301, 302) du boîtier (30) sont dans une matière plastique et **en ce que** les premier et deuxième tronçons (301, 302) du boîtier (30) sont obtenus selon une technique d'injection de matière plastique.

9. Actionneur électromécanique tubulaire (11) pour une installation domotique de fermeture ou de protection solaire selon l'une quelconque des revendications 1 à 8, **caractérisé en ce que** chacun des premier et deuxième tronçons (301, 302) du boîtier (30) comprend une première rainure (57a) et une deuxième rainure (57b) configurées pour maintenir en position la carte électronique (29) à l'intérieur du boîtier (30), dans la configuration assemblée de l'unité électronique de contrôle (15).

10. Installation domotique de fermeture ou de protection solaire comprenant un écran (2) enroulable sur un tube d'enroulement (4) entraîné en rotation par un actionneur électromécanique tubulaire (11), **caractérisée en ce que** l'actionneur électromécanique tubulaire (11) est conforme à l'une quelconque des revendications 1 à 9.

## Patentansprüche

1. Rohrförmiger elektromechanischer Aktuator (11) für eine häusliche Schließ- oder Sonnenschutzautomatisierungsanlage, wobei der elektromechanische Aktuator (11) wenigstens umfasst:
- eine elektronische Steuereinheit (15), wobei die elektronische Steuereinheit (15) ein Gehäuse (30) und eine Elektronikkarte (29) umfasst, wobei die Elektronikkarte (29) im Inneren des Gehäuses (30) angeordnet ist, in einer montierten Konfiguration der elektronischen Steuereinheit (15),
- einen Elektromotor (16),
- ein Getriebe (19),
- eine Abtriebswelle (20),
- einen Kasten (17), wobei der Kasten (17) hohl ist und eingerichtet ist für das Aufnehmen wenigstens der elektronischen Steuereinheit (15), des Elektromotors (16) und des Getriebes (19), und
- ein Verschließelement (21), wobei das Verschließelement (21) eingerichtet ist zum Verschließen eines Endes (17b) des Kastens (17),
**dadurch gekennzeichnet, dass**:
- das Gehäuse (30) der elektronischen Steuereinheit (15) wenigstens einen ersten Abschnitt (301) umfasst, der in Form eines hohlen Rohrs realisiert ist, und einen zweiten Abschnitt (302) umfasst, der in Form eines hohlen Rohrs realisiert ist, wobei der erste und zweite Abschnitt (301, 302) eingerichtet sind für das Aufnehmen der Elektronikkarte (29), in der montierten Konfiguration der elektronischen Steuereinheit (15), und
- der erste Abschnitt (301) des Gehäuses (30) erste Befestigungselemente (51a) umfasst, die eingerichtet sind für das Zusammenwirken mit ersten Befestigungselementen (51b) des zweiten Abschnitts (302) des Gehäuses (30), in der montierten Konfiguration der elektronischen Steuereinheit (15).

2. Rohrförmiger elektromechanischer Aktuator (11) für eine häusliche Schließ- oder Sonnenschutzautomatisierungsanlage nach Anspruch 1, **dadurch gekennzeichnet, dass** die ersten Befestigungselemente (51a, 51b) des ersten und zweiten Abschnitts (301, 302) des Gehäuses (30) Elemente zum Befestigen durch elastisches Einrasten sind.

3. Rohrförmiger elektromechanischer Aktuator (11) für eine häusliche Schließ- oder Sonnenschutzautomatisierungsanlage nach Anspruch 1 oder Anspruch 2, **dadurch gekennzeichnet, dass** der erste Abschnitt (301) des Gehäuses (30) zweite Befestigungselemente (50a) umfasst, die eingerichtet sind für das Zusammenwirken mit ersten Befestigungselementen (50b) des Elektromotors (16), in einer montierten Konfiguration des elektromechanischen Aktuators (11).

4. Rohrförmiger elektromechanischer Aktuator (11) für eine häusliche Schließ- oder Sonnenschutzautomatisierungsanlage nach einem der Ansprüche 1 bis 3, **dadurch gekennzeichnet, dass** der Elektromotor (16) einen elektrischen Steckverbinder (49) umfasst, der eingerichtet ist für das Zusammenwirken mit der Elektronikkarte (29) der elektronischen Steuereinheit (15), in einer montierten Konfiguration des elektromechanischen Aktuators (11).

5. Rohrförmiger elektromechanischer Aktuator (11) für eine häusliche Schließ- oder Sonnenschutzautomatisierungsanlage nach einem der Ansprüche 1 bis 4, **dadurch gekennzeichnet, dass** der elektromechanische Aktuator (11) ferner ein Schnittstellenelement (31) umfasst, wobei das Schnittstellenelement (31) zwischen dem Verschließelement (21) und der elektronischen Steuereinheit (15) angeordnet ist, und dadurch, dass der zweite Abschnitt (302) des Gehäuses (30) zweite Befestigungselemente (50c) umfasst, die eingerichtet sind zum Zusammenwirken mit ersten Befestigungselementen (50d) des Schnittstellenelements (31), in einer montierten Konfiguration des elektromechanischen Aktuators (11).

6. Rohrförmiger elektromechanischer Aktuator (11) für eine häusliche Schließ- oder Sonnenschutzautomatisierungsanlage nach Anspruch 3 und nach Anspruch 5, **dadurch gekennzeichnet, dass** der erste und zweite Abschnitt (301, 302) des Gehäuses (30) die ersten bzw.und zweiten Befestigungselemente (50a, 51a, 51b, 50c) umfassen.

7. Rohrförmiger elektromechanischer Aktuator (11) für eine häusliche Schließ- oder Sonnenschutzautomatisierungsanlage nach Anspruch 5 oder nach Anspruch 6, **dadurch gekennzeichnet, dass** das Schnittstellenelement (31) einen elektrischen Steckverbinder (48) umfasst, der eingerichtet ist für das Zusammenwirken mit der Elektronikkarte (29) der elektronischen Steuereinheit (15), in der montierten Konfiguration des elektromechanischen Aktuators (11).

8. Rohrförmiger elektromechanischer Aktuator (11) für eine häusliche Schließ- oder Sonnenschutzautomatisierungsanlage nach einem der Ansprüche 1 bis 7, **dadurch gekennzeichnet, dass** der erste und zweite Abschnitt (301, 302) des Gehäuses (30) aus einem Kunststoff sind, und dadurch, dass der erste und zweite Abschnitt (301, 302) des Gehäuses (30) gemäß einer Kunststoffspritzgusstechnik erhalten sind.

9. Rohrförmiger elektromechanischer Aktuator (11) für eine häusliche Schließ- oder Sonnenschutzautomatisierungsanlage nach einem der Ansprüche 1 bis 8, **dadurch gekennzeichnet, dass** jeder des ersten und zweiten Abschnitts (301, 302) des Gehäuses (30) eine erste Nut (57a) und eine zweite Nut (57b) umfasst, die eingerichtet sind für das Halten der Elektronikkarte (29) in Position im Inneren des Gehäuses (30), in der montierten Konfiguration der elektronischen Steuereinheit (15).

10. Häusliche Schließ- oder Sonnenschutzautomatisierungsanlage, umfassend eine Blende (2), die auf ein Wickelrohr (4) wickelbar ist und von einem rohrförmigen elektromechanischen Aktuator (11) zur Drehung angetrieben ist, **dadurch gekennzeichnet, dass** der elektromechanische Aktuator (11) nach einem der Ansprüche 1 bis 9 ausgeführt ist.

## Claims

1. A tubular electromechanical actuator (11) for a closure or sun protection home-automation installation, the electromechanical actuator (11) comprising at least:
- an electronic control unit (15), the electronic control unit (15) comprising a housing (30) and an electronic board (29), the electronic board (29) being arranged inside the housing (30), in an assembled configuration of the electronic control unit (15),
- an electric motor (16),
- a reduction gear (19),
- an output shaft (20),
- a casing (17), the casing (17) being hollow and configured to house at least the electronic control unit (15), the electric motor (16) and the reduction gear (19), and
- a closure element (21), the closure element (21) being configured to close off an end (17b) of the casing (17),
**characterized in that**:
- the housing (30) of the electronic control unit (15) comprises at least a first section (301), made in the form of a hollow tube, and a second section (302), made in the form of a hollow tube, the first and second sections (301, 302) being configured to house the electronic board (29), in the assembled configuration of the electronic control unit (15), and
- the first section (301) of the housing (30) comprises first fastening elements (51a) configured to cooperate with first fastening elements (51b) of the second section (302) of the housing (30), in the assembled configuration of the electronic control unit (15).

2. The tubular electromechanical actuator (11) for a closure or sun protection home-automation installation according to claim 1, **characterized in that** the first fastening elements (51a, 51b) of the first and second sections (301, 302) of the housing (30) are fastening elements by resilient snapping.

3. The tubular electromechanical actuator (11) for a closure or sun protection home-automation installation according to claim 1 or claim 2, **characterized in that** the first section (301) of the housing (30) comprises second fastening elements (50a) configured to cooperate with first fastening elements (50b) of the electric motor (16), in an assembled configuration of the electromechanical actuator (11).

4. The tubular electromechanical actuator (11) for a closure or sun protection home-automation installation according to any one of claims 1 to 3, **characterized in that** the electric motor (16) comprises an electric connector (49) configured to cooperate with the electronic board (29) of the electronic control unit (15), in an assembled configuration of the electromechanical actuator (11).

5. The tubular electromechanical actuator (11) for a closure or sun protection home-automation installation according to any one of claims 1 to 4, **characterized in that** the electromechanical actuator (11) also comprises an interface element (31), the interface element (31) being positioned between the closure element (21) and the electronic control unit (15), and **in that** the second section (302) of the housing (30) comprises second fastening elements (50c) configured to cooperate with first fastening elements (50d) of the interface element (31), in an assembled configuration of the electromechanical actuator (11).

6. The tubular electromechanical actuator (11) for a closure or sun protection home-automation installation according to claim 3 and according to claim 5, **characterized in that** the first and second sections (301, 302) of the housing (30) respectively comprise the same first and second fastening elements (50a, 51a, 51b, 50c).

7. The tubular electromechanical actuator (11) for a closure or sun protection home-automation installation according to claim 5 or according to claim 6, **characterized in that** the interface element (31) comprises a electric connector (48) configured to cooperate with the electronic board (29) of the electronic control unit (15), in the assembled configuration of the electromechanical actuator (11).

8. The tubular electromechanical actuator (11) for a closure or sun protection home-automation installation according to any one of claims 1 to 7, **characterized in that** the first and second sections (301, 302) of the housing (30) are made from a plastic material and **in that** the first and second sections (301, 302) of the housing (30) are obtained using a technique for injecting plastic material.

9. The tubular electromechanical actuator (11) for a closure or sun protection home-automation installation according to any one of claims 1 to 8, **characterized in that** each of the first and second sections (301, 302) of the housing (30) comprises a first groove (57a) and a second groove (57b) that are configured to keep the electronic board (29) in position inside the housing (30), in the assembled configuration of the electronic control unit (15).

10. A home-automation installation for closing or providing sun protection that comprises a screen (2) able to be wound on a winding tube (4) rotated by a tubular electromechanical actuator (11), **characterized in that** the tubular electromechanical actuator (11) is according to any one of claims 1 to 9.
